# EUROPÄISCHE PATENTSCHRIFT

(11) **EP 0 533 157 B1**
(45) Veröffentlichungstag und Bekanntmachung des Hinweises auf die Patenterteilung: **15.03.1995**
(21) Anmeldenummer: 92115914.1
(22) Anmeldetag: 17.09.1992
(51) Int. Cl.: C04B 35/45, C04B 35/653, H01L 39/12

(54) **Hochtemperatursupraleitende Keramik und Verfahren zu ihrer Herstellung**
High temperature superconducting ceramic and process of its manufacture
Céramique supraconductrice à haute température et son procédé de préparation

(30) Priorität: 18.09.1991 DE 4131111
(43) Veröffentlichungstag der Anmeldung: 24.03.1993
(73) Patentinhaber: Daimler-Benz Aktiengesellschaft, 70546 Stuttgart (DE)
(72) Erfinder: Kanbach, Helmut, Dr. rer. nat., W-6453 Seligenstadt (DE); Denda, Michael, W-6070 Langen (DE); Niemann, Kornelia, W-6000 Frankfurt a. M. 71 (DE); Rukwied, Armin, Dr. rer. nat., W-6057 Dietzenbach (DE)
(74) Vertreter: Erbacher, Alfons, Dipl.-Ing.

(56) Entgegenhaltungen:
- JAP. J. APPL. PHYS. Bd. 30, Nr. 2, Februar 1991, Seiten 246 - 250 T. SAKAI ET AL. 'Superconductivity of YBa2Cu3O7-x by Addition of Reaktive Fine Powders'
- CRYOGENICS Bd. 30, Januar 1990, Seiten 5 - 10 K. MATSUMOTO ET AL. 'Magnetic Flux Pinning Properties of Oxide Superconductors Produced by Melt Processes'

## Beschreibung

Die Erfindung betrifft eine hochtemperatursupraleitende Keramik nach dem Oberbegriff des Anspruchs 1 oder des Anspruchs 2 und ein Verfahren zu ihrer Herstellung.

Aus der Fachzeitschrift "Japanese Journal of Applied Physics", Vol. 30, Nr. 2, Februar 1991, Seiten 246-250, ist es bekannt, supraleitende Keramiken auf der Basis von YBaCuO mit einem Zusatz von pulverförmigem ZrO₂ durch Schmelzprozessieren herzustellen. Eigene Massnahmen, die zu einer feinen Verteilung von pinning-Zentren führen, sind dort nicht beschrieben. Die pinnig-Zentren sind bedeutsam für die Verankerung der magnetischen Flusslinien im Supraleiter.

Es ist auch möglich, eine supraleitende Keramik durch Sintern herzustellen; nachteilig dabei ist die Entstehung vieler kleiner Korngrenzen (Korn-Korn-Grenzflächen, sog. "weak links") in der Keramik, was sich ungünstig auf die erzielbare Stromstärke auswirkt.

Der Erfindung liegt die Aufgabe zugrunde, eine hochtemperatursupraleitende Keramik zu schaffen, die für möglichst hohe kritische Stromdichten bei 77 K ausgelegt ist und für die Anwendung in elektrischen Einrichtungen in eine geeignete Form gebracht werden kann, und ein Verfahren zu ihrer Herstellung anzugeben.

Diese Aufgabe wird gelöst durch eine hochtemperatursupraleitende Keramik gemäss Anspruch 1 oder Anspruch 2 und ein Verfahren zu ihrer Herstellung nach Anspruch 6.

Ein Yttrium-Überschuß ist bei der Herstellung der Keramik von Vorteil; er begünstigt nämlich besonders feine Ausscheidungen von Y₂Ba₁Cu₁Oₓ-Partikeln, die in der Keramik als pinning-Zentren für magnetische Flusslinien dienen. Magnetische Flusslinien, die die Keramik durchsetzen, werden durch die vorgenannten, in der Keramik enthaltenen Partikel festgehalten, und zwar an der Oberfläche der Partikel; die Partikel dienen also als Flussverankerung. Dadurch werden Energieverluste gering gehalten; eine Bewegung der magnetischen Flusslinien würde nämlich Energieverluste hervorrufen. Die Anwendung eines Schmelzverfahrens zur Herstellung von supraleitender Keramik führt zu einem besonders dichten Gefüge, wodurch eine hohe kritische Stromdichte gewährleistet ist. Der Vorteil wird besonders deutlich bei einem Vergleich mit einem Sinterverfahren, bei dem viele kleine Korngrenzen (Korn-Korn-Grenzflächen, sog. "weak links") in der Keramik entstehen, die die erreichbare kritische Stromdichte herabsetzen.
Wenn die Keramik durch ein Schmelzverfahren entstanden ist, dann weist sie - im Vergleich zum Sinterverfahren - ein grobkörnigeres Gefüge mit geringerer Gesamtkorngrenzenfläche und damit bessere Eigenschaften für den Stromfluss auf.

Günstig ist es, während des Herstellungsverlaufs beim Abkühlen der partiell aufgeschmolzenen Keramik einen Temperaturgradienten im Innern aufrechtzuerhalten; auf diese Weise wird verhindert, dass dass Erstarren der Keramik an verschiedenen Stellen ihres Volumens gleichzeitig beginnt; vielmehr breitet sich die "Erstarrungsgrenze", an der kühleren Seite beginnend, in einer Richtung durch die Keramik aus; auf diese Weise ergibt sich eine günstigere Textur, die eine Erhöhung der kritischen Stromdichte und der mechanischen Festigkeit zur Folge hat.

Vorteilhaft ist die Beigabe von feinverteiltem Platin. Der Platinzusatz bewirkt nämlich eine zusätzliche Verfeinerung der flussverankernden 211-Ausscheidungen.

Zweckmässige Verwendungen der erfindungsgemässen Keramik gehen aus den Ansprüchen 3 bis 5 hervor. Herstellungsverfahren sind in den Ansprüchen 6 bis 10 definiert.

Die Erfindung wird im folgenden an Hand eines in vier Figuren dargestellten Ausführungsbeispiels, aus dem sich weitere Merkmale, Einzelheiten und Vorteile ergeben, näher beschrieben.

Es zeigen
- Fig. 1: den Temperaturverlauf während des Schmelzverfahrens bei der Herstellung der Keramik,
- Fig. 2: ein Y-Ba-Cu-O-Phasendiagramm,
- Fig. 3: Streubänder, die aus temperaturabhängigen Messungen zur Supraleitfähigkeit an verschiedenen Proben aus supraleitender Keramik entstanden sind,
- Fig. 4: einen Messaufbau für ein Messverfahren zur Bestimmung der Transportstromdichte in einem hochtemperatursupraleitenden Material.

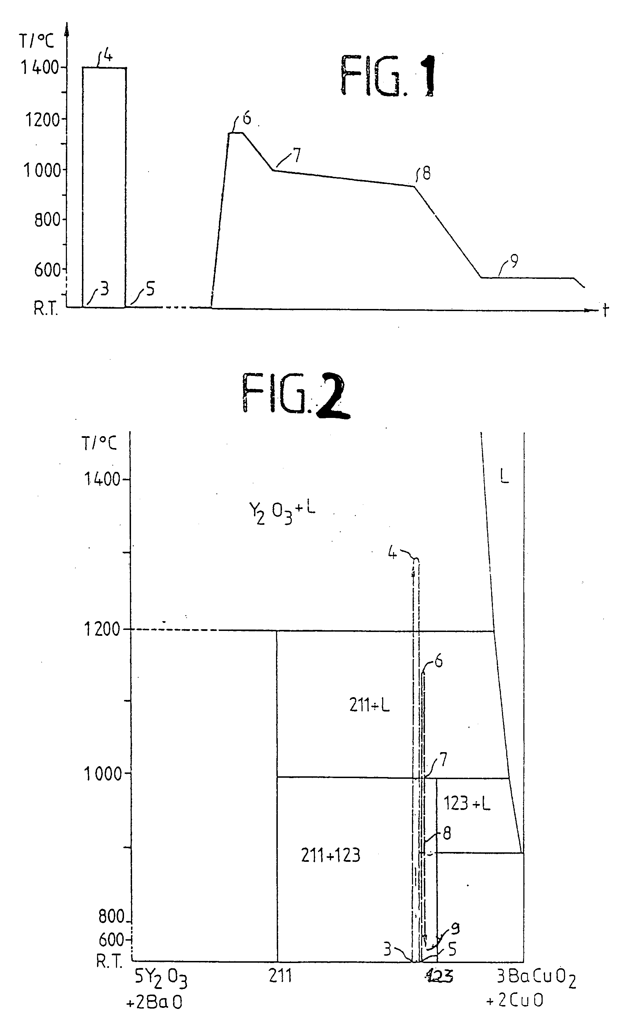

Anhand eines in Fig. 1 dargestellten Temperaturverlaufes lässt sich ein Herstellungsverfahren für hochtemperatursupraleitendes, keramisches Material erläutern. Die Ordinate beginnt unten bei Raumtemperatur (R.T.). Das Herstellungsverfahren lässt sich auch in einem Y-Ba-Cu-O-Phasendiagramm in Fig. 2 nachvollziehen. Gleiche Temperaturen sind in beiden Figuren mit den gleichen Bezugszeichen versehen.
Als Ausgangsmaterial wird Y₁Ba₂Cu₃O_{z}-Pulver (mit 6 ≦ z ≦ 7) mit einem bestimmten Ausgangsgewicht verwendet, welches zusätzlich mit 0-20 Gew.-% Y₂O₃ und 0-80 Gew.-% Y₂Ba₁Cu₁O₅ durchsetzt ist; dabei beziehen sich die Gew.-% auf das Ausgangsgewicht.
In einem Platin-Tiegel wird das Ausgangsmaterial - ausgehend von Raumtemperatur (3) - rasch auf eine Temperatur (4) von ca. 1200 bis ca. 1400 °C gebracht und dort ca. 5 Minuten gehalten.
Nach dem Y-Ba-Cu-O-Phasendiagramm nach Fig. 2 liegen bei dieser Temperatur (4) gleichzeitig Y₂O₃-Teilchen und Schmelze (L) vor. Nach raschem Abkühlen auf Raumtemperatur (5) entsteht ein Stoff, welcher zum Zwecke einer Homogenisierung und Verfeinerung der Y₂O₃-Teilchen zu einem Pulver gemahlen wird.

Das Abkühlen kann beispielsweise durch Ausgiessen der mit den Y₂O₃-Teilchen durchsetzten Schmelze in flüssigen Stickstoff vorgenommen werden; stattdessen kann auch die Splat-Cooling-Technik angewendet werden, bei der die Schmelze zwischen zwei kühlen Metallplatten flachgepresst wird.
Dem Pulver werden - fein verteilt - mit 0,5 bis 10 Gew.-% Nb-, Nb₂O₅-Pulver oder ein zirkonhaltiger Anteil, und zwar Zr- oder ZrO₂-Pulver beigemengt. Die Zusätze können auch vor dem ersten Aufschmelzen dem Ausgangsmaterial zugegeben werden. Ferner kann mit einem Anteil von ca. 0,5 Gew.-% pulverförmiges Platin beigemengt werden.
Das mit den zuvor erwähnten Zusätzen vermengte Pulver wird zu einem gewünschten Massivteil (Formteil) verpresst. Anschliessend wird gemäss Fig. 1 das Herstellungsverfahren durch zügige Erwärmung von Raumtemperatur auf eine Temperatur (6) von etwa 1030 bis 1200 °C fortgesetzt. Die Formung des Massivteils bleibt in diesem Temperaturbereich im wesentlichen erhalten. Die Erwärmung führt nämlich nur zum partiellen Aufschmelzen im Zweiphasenbereich (211+L) (s. Fig. 2); die feinverteilten Y₂O₃-Teilchen wirken dabei als Keime für die Bildung von 211-Teilchen, das sind Teilchen der Form Y₂Ba₁Cu₁O₅. Das Formteil wird dieser Temperatur 5 bis 120 min lang ausgesetzt. Nach Abkühlung (mit mindestens 80 K/h) auf eine Temperatur (7) zwischen 1010 °C und 1020 °C (peritektische Temperatur gemäss Fig. 2) werden die Massivteile langsam (mit 0,5 bis 5 K/h) auf eine Temperatur (8) unter 980 °C abgekühlt. Anschliessend wird das Massivteil in Luft bis zur vollständigen Sättigung mit Sauerstoff einer Temperatur (9) zwischen ca. 600 bis 200 °C ausgesetzt. Die Sättigung mit Sauerstoff ist dann erreicht, wenn in der Keramik nahezu alle Y¹Ba₂Cu₃O_{z}-Matrix-Kristalle (mit 6 ≦ z ≦ 7) sich zu einer Phase des Typs Y₁Ba₂Cu₃O₇ umgewandelt haben.
Die Reaktion (211 + L) --> (211 + 123) nach Fig. 2, bei der aus grobkörnigen 211-Teilchen feinkörnige 211-Teilchen innerhalb einer 123-Phase werden (zwischen den Temperaturen 7 und 8), und die Sättigung mit Sauerstoff, die bei der Temperatur (9) abläuft, werden durch die Keimwirkung der Niobate bzw. Zirkonate stark beschleunigt. Die Dauer bis zur Sättigung hängt von der Grösse und der Formung des Massivteils ab, bei Linearabmessungen von einigen Zentimetern reicht eine Zeit von ca. 5 bis 20 Stunden bis zur Sättigung aus. Das ist eine für eine wirtschaftliche Herstellung vertretbare Zeit.

In Fig. 2 ist ein Y-Ba-Cu-O-Phasendiagramm wiedergegeben. Auf der Abszisse sind für stöchiometrische Zusammensetzungen von Y-Ba-Cu-Verbindungen Indizes angegeben, und zwar bedeutet 211 eine Phase der Form Y₂Ba₁Cu₁O₅ und 123 eine Phase der Form Y₁Ba₂Cu₃O₇. Die Ordinate beginnt bei Raumtemperatur (R.T.). Bei Verwendung eines Gemenges des Typs Y_{1+2x+y}Ba₂₊ₓCu₃₊ₓO_{z} (mit 0 ≦ x ≦ 0,5, 0 ≦ y ≦ 0,5 und 6 ≦ z ≦ 7) für die Herstellung einer hochtemperatursupraleitenden Keramik ist bei festen Werten für x und y auf der Abszisse ein Punkt links neben dem Punkt 123 entscheidend. Die Temperaturen (3) bis (9) in Fig. 2 entsprechen denen in Fig. 1, wo der zeitliche Verlauf der Wärmebehandlung dargestellt ist.

Zur Beschreibung von Supraleiteigenschaften einer Probe kann ein Messverfahren, das die induktive Abschirmung der Probe in Abhängigkeit von der Temperatur erfasst, herangezogen werden. Bei einem solchen Messverfahren wird die Probe zwischen zwei in Spulenlängsrichtung mit Abstand voneinander angeordneten Spulen gelegt. Die eine Spule dient als Sendespule und ist von einem Wechselstrom durchflossen, die andere hat die Funktion einer Empfangsspule, in der durch das von der Sendespule erzeugte Magnetfeld eine Induktionsspannung entsteht. An die Empfangsspule ist ein Gleichrichter mit einem ausgangsseitigen Widerstand angeschlossen. An dem Widerstand ist eine durch Gleichrichtung der Induktionsspannung entstehende Spannung abgreifbar. Wenn diese Spannung auf eine andere (Bezugs-)Spannung, beispielsweise die an der Sendespule anliegende Spannung bezogen wird, entsteht eine dimensionslose Grösse.

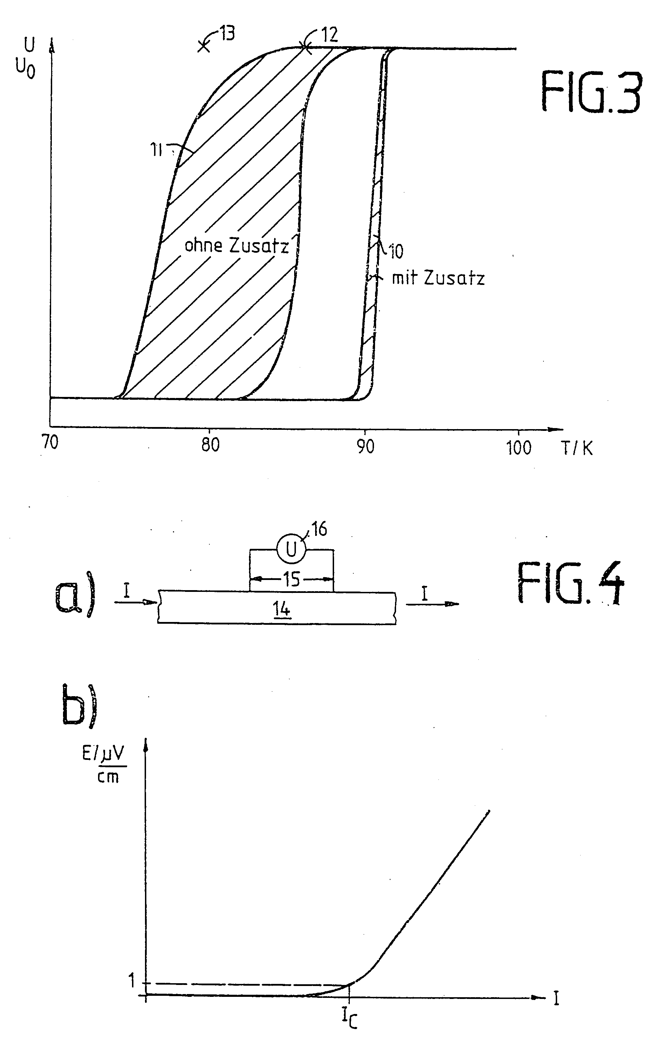

Fig. 3 zeigt die Bereiche, in denen Messkurven für verschiedene Proben liegen, die durch Messung dieser dimensionslosen Grösse in Abhängigkeit von der Temperatur entstanden sind. Je kleiner diese Grösse ist, desto mehr wird ein von der Senderspule kommender magnetischer Fluss von der Probe abgeschirmt. Das Ausmass der Abschirmung des Magnetfeldes lässt auf das Ausmass des Vorliegens supraleitender Bereiche in der Probe schliessen, denn bei Supraleitung ist die Probe diamagnetisch. Messkurven für eine Vielzahl von Proben aus supraleitender Keramik, die jedoch alle mit derselben Temperaturführung hergestellt wurden, ergeben die dargestellten Streubereiche (10) und (11).

Bei denjenigen Proben, bei denen während der Herstellung - wie weiter oben beschrieben - z. B. Nb- oder Nb₂O₅- und Y₂Ba₁Cu₁O₅-, Y₂O₃- und Pt-Pulver zugesetzt wurden, ergeben sich in einem engen Streubereich (10) liegende Messkurven.

Für die anderen, ohne Zusatz - d. h. mit reinem Y₁Ba₂Cu₃O_{z}-Pulver - hergestellten Proben liegen die Messkurven recht weit auseinander; es ergibt sich ein breiterer Streubereich (11).

Die Temperatur, bei der von höheren Temperaturen kommend ein beobachtbarer Abfall der Induktionsspannung an der Empfangsspule eintritt (gleichbedeutend mit dem Abfall der Messkurve in Fig. 3), ist der Wert der Sprungtemperatur der Probe. Bei dieser Temperatur gibt es durchgehende supraleitende Bereiche in der Probe. Es ist deutlich zu sehen, dass sich mit Hilfe der Zusätze eine Sprungtemperatur von ca. 92 K erzielen lässt. Bei Proben, bei denen während der Herstellung keine Zusätze beigemengt wurden, erreicht die Sprungtemperatur nur einen niedrigeren Wert.
Dieser Sachverhalt wird bestätigt durch Ergebnisse aus dem Aufsatz "Magnetic flux pinning properties of oxide superconductors produced by melt processes" in der Druckschrift "Cryogenics", Vol. 30, Januar 1990 von K. Mastumoto, H. Kikuchi, N. Uno und Y. Tanaka. Aus dieser Schrift ist bei Anwendung eines Schmelzverfahrens eine Sprungtemperatur (12) von 86 K bekannt.

Dagegen können mit dem weiter oben beschriebenen Herstellungsverfahren auch grosse Proben mit Linearabmessungen von mehreren Zentimetern mit einer höchstmöglichen Sprungtemperatur von 92 K mit einem Schmelzverfahren hergestellt werden. Ein wichtiges Merkmal ist auch die Steilheit des supraleitenden Übergangs. Material, dem bei der Herstellung Nb- oder Nb₂O₅- und Y₂Ba₁Cu₁O₅-, Y₂O₃- und Pt-Pulver zugesetzt worden sind, hat einen wesentlich steileren Übergang in den supraleitenden Zustand als das Material ohne Zusatz.

Die vorteilhafte Wirkung von Zusätzen auf Nb- und Zr-Basis kann zusammenfassend wie folgt charakterisiert werden:
Erstens: Die peritektische Rückreaktion von (211+L) mit grobkörnigen 211-Ausscheidungen zu (211 + 123) mit feinkörnigen 211-Ausscheidungen wird aufgrund der Keimbildung von Niobaten bzw. Zirkonaten stark beschleunigt.
Zweitens: Die Niobate bzw. Zirkonate wirken zusätzlich zu 211-Ausscheidungen als Pinningzentren für den magnetischen Fluss. Drittens: Die Sauerstoffaufnahme wird erleichtert.
Anhand von Fig. 4 lässt sich die Messung der kritischen Transportstromstärke I_{C} einer Probe (14) aus supraleitendem Material erläutern. Nach Fig. 4a wird durch die Probe (14) ein (einstellbarer) Gleichstrom I ("Transportstrom") geleitet. Aussen an der Probe (14) sind in einem festen Abstand (15) zueinander zwei elektrische Anschlüsse (Spannungsabgriffe) angebracht, die zu einem Spannungsmesser (16) geführt sind. Jede dort angezeigte Spannung wird durch den Abstand (15) dividiert, so dass sich ein Wert für eine Feldstärke E ergibt. Der Gleichstrom I wird bei konstanter Temperatur nun so lange gesteigert, bis diese Feldstärke den Wert 1·10⁻⁶ V/cm erreicht.
Gemäss Fig. 4b, die den Verlauf der Feldstärke in Abhängigkeit von dem Gleichstrom (Transportstrom) zeigt, ist der bei einer Feldstärke von 1.10⁻⁶ V/cm durch die Probe fliessende Strom der sog. kritische Transportstrom. Die kritische Transportstromdichte ergibt sich durch Division des kritischen Transportstroms I_{C} durch die geometrische Querschnittsfläche der Probe.
Eine mit dem obengenannten Verfahren hergestellte Keramik ist verwendbar für Kerne in hochstromtragfähigen Spulen. Solche Spulen werden für Starkstromzwecke eingesetzt, z. B. für strombegrenzende Drosselspulen in Anlagen der Energieerzeugung und Energieverteilung. Bei einer gleichmässigen Erhöhung des Stromes, der durch eine mit einem hochtemperatursupralteitenden Kern ausgestatteten Spule fliesst, dringt der magnetische Fluss in den Kern ein, wobei der Betrag des Flusses, in Richtung des Kerninneren steil und linear fällt.
Bei kleinen Strömen entsteht nur eine kleine Selbstinduktionsspannung, so dass also der durch die Spule fliessende Strom nur wenig gedämpft wird; bei grossen Strömen im Kurzschlussfall verursacht die hohe Selbstinduktionsspannung eine rasche Begrenzung des Stromes. Durch die supraleitenden Eigenschaften des Kerns geht nur wenig. Energie in der Drosselspule verloren.

## Patentansprüche

1. Hochtemperatursupraleitende Keramik auf der Basis von Y-Ba-Cu-O, welche durch partielles Schmelzen hergestellt ist, mit einem im Herstellungsverlauf beigemengten, feinverteilten Anteil von Y₂O₃,
**dadurch gekennzeichnet**,
dass die Keramik vor dem Schmelzen mit feinverteiltem Niob oder Nioboxid und mit Y₂Ba₁Cu₁O₅ versetzt worden ist und dass die Keramik in ihrer Endzusammensetzung aus mehrphasigem Y_{1+2x+y}Ba₂₊ₓCu₃₊ₓO_{z} mit einem niobhaltigen Anteil besteht, wobei 0 ≦ x ≦ 0,5, 0 ≦ y ≦ 0,5 und 6 ≦ z ≦ 7 ist.

2. Hochtemperatursupraleitende Keramik auf der Basis von Y-Ba-Cu-O, welche durch partielles Schmelzen hergestellt ist, mit einem im Herstellungsverlauf beigemengten, feinverteilten zirkonhaltigen Anteil und mit einem Anteil von Y₂O₃,
**dadurch gekennzeichnet**,
dass die Keramik vor dem Schmelzen mit einem feinverteilten Anteil von Y₂Ba₁Cu₁O₅ versetzt worden ist und dass die Keramik in ihrer Endzusammensetzung aus mehrphasigem Y_{1+2x+y}Ba₂₊ₓCu₃₊ₓO_{z} mit einem zirkonhaltigen Anteil besteht, wobei 0 ≦ x ≦ 0,5, 0 ≦ y ≦ 0,5 und 6 ≦ z ≦ 7 ist.

3. Verwendung einer hochtemperatursupraleitenden Keramik nach einem der vorangehenden Ansprüche als Kern einer Spule.

4. Verwendung einer hochtemperatursupraleitenden Keramik nach Anspruch 1 oder 2 als magnetfeldabschirmendes Bauteil.

5. Verwendung einer hochtemperatursupraleitenden Keramik nach Anspruch 1 oder 2 als passives Magnetlager.

6. Verfahren zur Herstellung einer hochtemperatursupraleitenden Keramik nach einem der vorangehenden Ansprüche,
**dadurch gekennzeichnet**,
dass zunächst Y₁Ba₂Cu₃O_{z}-Pulver (mit 6 ≦ z ≦ 7) mit einem Zusatz von 0,5 bis 10 Gew.-% Nb-, Nb₂O₅-, Zr- oder ZrO₂-Pulver und mit einem weiteren Zusatz von 0-80 Gew.-% Y₂Ba₁Cu₁O₅ und 0-20 Gew.-% Y₂O₃ zu einem pulverförmigen Ausgangsmaterial vermengt wird, dass anschliessend aus diesem Ausgangsmaterial durch Kaltverpressen ein Formteil angefertigt wird, dass danach dieses Formteil 5 bis 120 Minuten lang bei einer Temperatur (6) zwischen 1030 und 1200 °C partiell geschmolzen wird, dass es anschliessend mit mindestens 80 K/h auf eine Temperatur (7) zwischen 1010 und 1020 °C abgekühlt wird, dass es danach in einem Abkühlvorgang mit 0,5 bis 5 K/h auf unter 980 °C gebracht wird, dass es anschliessend in sauerstoffhaltiger Umgebung bis zur vollständigen Sättigung mit Sauerstoff einer Temperatur (9) von 600-200 °C ausgesetzt wird und dass es schliesslich auf Raumtemperatur (R.T) abgekühlt wird.

7. Verfahren zur Herstellung einer hochtemperatursupraleitenden Keramik nach Anspruch 6,
**dadurch gekennzeichnet,**
dass dem Kaltverpressen ein zusätzlicher Schmelzvorgang vorgeschaltet wird, der so abläuft, dass zunächst das pulverförmige Ausgangsmaterial rasch bei einer Temperatur (4) von 1200 bis 1400 °C partiell geschmolzen und dort ca. 5 Minuten gehalten wird und dass es anschliessend rasch abgekühlt und danach ungefähr bei Raumtemperatur (R.T.) pulverisiert wird.

8. Verfahren zur Herstellung einer hochtemperatursupraleitenden Keramik nach Anspruch 7,
**dadurch gekennzeichnet**,
dass das Ausgangsmaterial unvermischtes Y₁Ba₂Cu₃Oₓ-Pulver (mit 6 ≦ x ≦ 7) ist und dass erst nach dem vorgeschalteten Schmelzvorgang das Nb-, Nb₂O₅-, Zr oder ZrO₂-Pulver und Y₂Ba₁Cu₁O₅ und Y₂O₃ beigemischt werden.

9. Verfahren zur Herstellung einer hochtemperatursupraleitenden Keramik nach einem der Ansprüche 6 bis 8,
**dadurch gekennzeichnet,**
dass zusammen mit dem Nb-, Nb₂O₅- oder dem zirkonhaltigen Anteil Platin in feiner Verteilung zugesetzt wird.

10. Verfahren zur Herstellung einer hochtemperatursupraleitenden Keramik nach einem der Ansprüche 6 bis 9,
**dadurch gekennzeichnet**,
dass die Keramik während des Abkühlvorgangs einem Temperaturgradienten ausgesetzt wird, so dass sie, an einer Seite beginnend, erstarrt.

## Claims

1. High-temperature superconducting ceramic on the basis of Y-Ba-Cu-O, which is produced by partial melting with a finely distributed proportion of Y₂O₃ admixed in the course of production, characterised thereby, that the ceramic has been interspersed with finely distributed niobium or niobium oxide and with Y₂Ba₁Cu₁O₅ before the melting and that the ceramic in its final composition consists of multiphase Y₁ + 2x + yBa₂ + xCu₃ + xO_{z} with a constituent containing niobium, wherein 0 ≦ x ≦ 0.5, 0 ≦ y ≦ 0.5 and 6 ≦ z ≦ 7.

2. High-temperature superconducting ceramic on the basis of Y-Ba-Cu-O, which is produced by partial melting with a finely distributed constituent containing zirconium and with a proportion of Y₂O₃ admixed in the course of production, characterised thereby, that the ceramic has been interspersed with finely distributed niobium or niobium oxide and with Y₂Ba₁Cu₁O₅ before the melting and that the ceramic in its final composition consists of multiphase Y₁ + 2x + yBa₂ + xCu₃ + xO_{z} with a constituent containing zirconium, wherein 0 ≦ x ≦ 0.5, 0 ≦ y ≦ 0.5 and 6 ≦ z ≦ 7.

3. Use of a high-temperature superconducting ceramic according to one of the preceding claims as core of a coil.

4. Use of a high-temperature superconducting ceramic according to claim 1 or 2, as a component screening a magnetic field.

5. Use of a high-temperature superconducting ceramic according to claim 1 or 2 as a passive magnetic bearing.

6. Method of manufacturing a high-temperature superconducting ceramic according to one of the preceding claims, characterised thereby that Y₁Ba₂Cu₃O_{z} powder (wherein 6 ≦ z ≦ 7) is initially intermixed with an addition of 0.5 to 10% by weight of Nb, Nb₂O₅, Zr or ZrO₂ powder and with a further addition of 0 to 80% by weight of Y₂Ba₁Cu₁O₅ and 0 to 20% by weight of Y₂O₃ into a powdery starting material, that a moulded part is subsequently produced from this starting material by cold moulding, that this moulded part (5) is thereafter partially melted at a temperature (6) between 1030 to 1200°C for 5 to 120 minutes, that it is subsequently cooled at at least 80 K/h to a temperature (7) between 1010 and 1020°C, that it is brought thereafter to below 980°C in a cooling process at 0.5 to 5K/h, that it is subsequently exposed to a temperature (9) of 600 to 200°C in an environment containing oxygen up to the complete saturation with oxygen and that it is finally cooled down to room temperature (R.T).

7. Method of manufacturing a high-temperature, superconducting ceramic according to claim 6, characterised thereby, that the cold moulding is preceded by an additional melting operation which so takes place that the powdery starting material initially is partially melted rapidly at a temperature (4) of 1200 to 1400°C and kept there for about 5 minutes and that it is subsequently cooled down rapidly and thereafter pulverised approximately at room temperature (R.T).

8. Method of manufacturing a high-temperature superconducting ceramic according to claim 7, characterised thereby, that the starting material is unmixed Y₁Ba₂Cu₃Oₓ powder (wherein 6 ≦ x ≦ 7) and that the Nb, Nb₂O₅, Zr or ZrO2 powder and Y₂Ba₁Cu₁O₅ and Y₂O₃ are admixed only after the preceding melting operation.

9. Method of manufacturing a high-temperature superconducting ceramic according to one of claims 6 to 8, characterised thereby, that platinum in fine distribution is added to the Nb, Nb₂O₅ or zirconium-containing constituent.

10. Method of manufacturing a high-temperature superconducting ceramic according to one of claims 6 to 9, characterised thereby, that the ceramic is subjected to a temperature gradient during the cooling process, so that it hardens starting at one side.

## Revendications

1. Céramique supraconductrice à haute température à base de Y-Ba-Cu-O qui est fabriquée par fusion partielle, contenant du Y₂O₃ en fines particules mélangées au cours de la fabrication, caractérisée
en ce que la céramique est dotée avant la fusion de niob ou de nioboxyde en fines particules et de Y₂Ba₁Cu₁O₅ et en ce que la céramique, dans sa composition finale, se compose de Y_{1+2x+y}Ba₂₊ₓCu₃₊ₓO_{z} multiphasé contenant du niob, on a alors 0 ≦ x ≦ 0,5, 0 ≦ y ≦ 0,5 et 6 ≦ z ≦ 7.

2. Céramique supraconductrice à haute température à base de Y-Ba-Cu-O qui est fabriquée par fusion partielle, contenant du Y₂O₃ en fines particules mélangées au cours de la fabrication, caractérisée
en ce que la céramique est dotée avant la fusion de Y₂Ba₁Cu₁O₅ en fines particules et en ce que la céramique, dans sa composition finale, se compose de Y_{1+2x+y}Ba₂₊ₓCu₃+xO_{z} multiphasé contenant du zirconium, on a alors 0 ≦ X ≦ 0,5, 0 ≦ y ≦ 0,5 et 6 ≦ z ≦ 7.

3. Utilisation d'une céramique supraconductrice à haute température selon l'une des revendications précédentes en tant que noyau d'une bobine

4. Utilisation d'une céramique supraconductrice à haute température selon la revendication 1 ou 2 en tant que composant faisant écran au champ magnétique.

5. Utilisation d'une céramique supraconductrice à haute température selon la revendication 1 ou 2 en tant que palier magnétique passif.

6. Procédé pour la fabrication d'une céramique supraconductrice à haute température selon l'une des revendications précédentes,
caractérisé en ce que
tout d'abord la poudre Y₁Ba₂Cu₃O_{z} (avec 6 ≦ z ≦ 7) est mélangée à un additif de 0,5 à 10 % en poids de poudre Nb, Nb₂O₅, Zr ou ZrO₂ et à un autre additif de 0-80 % en poids de Y₂Ba₁Cu₁O₅ et de 0-20 % de Y₂O₃ pour obtenir une matière de base sous forme pulvérulente, en ce qu'ensuite à partir de cette matière de base est fabriquée, par pressage à froid, une pièce moulée, en ce qu'après cette pièce moulée est fondue partiellement pendant 5 à 120 minutes à une température (6) entre 1030° et 1200°C, en ce qu'elle est ensuite refroidie à au moins 80 K/h à une température (7) entre 1010 et 1020°C, en ce qu'après elle est amenée au cours d'une opération de refroidissement de 0,5 à 5 K/h en dessous de 980°C, en ce qu'ensuite dans un environnement contenant de l'oxygène elle est exposée à une température (9) de 600-200°C jusqu'à saturation complète avec l'oxygène et en ce que pour finir elle est refroidie à la température ambiante.

7. Procédé pour la fabrication d'une céramique supraconductrice à haute température selon la revendication 6,
caractérisé en ce qu'
un procédé de fusion supplémentaire intervient avant le pressage à froid, de manière à fondre partiellement tout d'abord la matière de base pulvérulente rapidement à une température (4) de 1200 à 1400°C, à l'y maintenir environ pendant 5 minutes et à la refroidir ensuite rapidement pour la pulvériser ensuite environ à la température ambiante (R.T.).

8. Procédé pour la fabrication d'une céramique supraconductrice à haute température selon la revendication 7,
caractérisé en ce que
la matière de base est de la poudre non mélangée Y₁Ba₂Cu₃Oₓ (avec 6 ≦ z ≦ 7) et en ce qu'après l'opération de fusion préalable la poudre Nb, Nb₂O₅, Zr ou ZrO₂ et Y₂Ba₁Cu₁O₅ ainsi que Y₂O₃ sont mélangés.

9. Procédé pour la fabrication d'une céramique supraconductrice à haute température selon l'une des revendications 6 à 8,
caractérisé en ce que
la portion contenant du zirconium, du Nb, ou Nb₂O₅ est mélangée au platine en fine répartition.

10. Procédé pour la fabrication d'une céramique supraconductrice à haute température selon l'une des revendications 6 à 9,
caractérisé en ce que
la céramique est exposée pendant l'opération de refroidissement à un gradient de température de sorte qu'elle se solidifie en commençant par un côté.
